# EUROPEAN PATENT SPECIFICATION

(11) **EP 3 168 493 B1**
(45) Date of publication and mention of the grant of the patent: **26.06.2019**
(21) Application number: 16196077.8
(22) Date of filing: 27.10.2016
(51) Int. Cl.: F16F 7/112

(54) **ADJUSTABLE LANDING GEAR VIBRATION SUPPRESSION**
SCHWINGUNGSUNTERDRÜCKUNG FÜR VERSTELLBARES FAHRWERK
SUPPRESSION DES VIBRATIONS DE TRAIN D'ATTERRISSAGE RÉGLABLE

(30) Priority: 04.11.2015 US 201514932655
(43) Date of publication of application: 17.05.2017
(73) Proprietor: Safran Landing Systems Canada Inc., Ajax, Ontario L1S 2G8 (CA)
(72) Inventor: NING, James Yuan-Chern, Oshawa, Ontario L1J 3B6 (CA)
(74) Representative: Gevers Patents

(56) References cited:
- EP-A1- 2 993 458
- WO-A1-2014/044555
- FR-A- 1 261 192
- US-A- 2 819 775
- US-A- 3 917 246

## Description

### BACKGROUND

Aircraft landing gear shimmy is a dynamic instability that results from torsional instability of the gear in combination with lateral instability. During taxiing, the landing gear of an aircraft is subject to various vibrations due to ground features, tire dynamics, and a variety of other factors. If the frequency of the vibration to which the landing gear is exposed is close to the natural frequency of the landing gear, a potential vibration resonance can occur, which can cause the landing gear to experience undesirable shimmy. In addition to causing vibration that can be felt by passengers, such shimmy can cause premature wear to landing gear components, and in extreme cases, can cause landing gear failure.

Known solutions for landing gear shimmy are typically driven by the relative motion or displacement between two landing gear components. One known configuration uses a fluid damper to reduce relative motion between landing gear components. For example, a cylinder may be connected to an upper torque link, and a piston may be connected to a lower torque link. Movement of the upper torque link relative to the lower torque link moves the piston within the cylinder to force damping fluid through an orifice to create a damping force that suppresses oscillation.

In another known configuration, the relative motion of the landing gear parts generates a frictional force between two or more frictional surfaces. This frictional force in turn dissipates the oscillation of the landing gear parts to reduce shimmy vibration.

Known shimmy damper systems suffer from several disadvantages. The relative motion that drives the dampers requires more complicated mounting features. This motion also requires that the dampers themselves be more complex, adding cost and weight to the designs. Further, known dampers are prone to wear, requiring more frequent service and replacement. Thus, there is a need for a simplified damper to counteract shimmy vibration in landing gear.

US-A-2 819 775 discloses a vibration absorber comprising an inertia member that is placed in the housing thereby defining two chambers. A conduit extends through the member to provide communication between the chambers.

FR-A-1 261 192 discloses a dynamic shock absorber. WO-A-2014/044555 discloses a shaking unit. US-A-3 917 246 discloses a vibration absorber. Each of these disclosures includes a housing with a mass inside that divides the housing into two chambers.

### SUMMARY

A representative embodiment of a disclosed shimmy damper includes a housing comprising an internal cavity. A weight is slidingly disposed within the cavity and sealingly engaging a wall of the cavity to divide the cavity into a first chamber and a second chamber. A passageway is formed integrally in the housing between the first and second chambers to provide an unregulated fluid connection therebetween. The shimmy damper further includes a fluid disposed within the first and second chambers such that the fluid provides a resistive force in response to movement of the weight within the cylinder.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of the disclosed subject matter will become more readily appreciated as the same become better understood by reference to the following detailed description, when taken in conjunction with the accompanying drawings, wherein:
FIGURE 1 shows an isometric view of a representative embodiment of a damper according to various aspects of the present disclosure; and
FIGURE 2 shows a side cross-sectional view of the damper of FIGURE 1.

### DETAILED DESCRIPTION

The detailed description set forth below in connection with the appended drawings wherein like numerals reference like elements is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

In the following description, numerous specific details are set forth in order to provide a thorough understanding of representative embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. Further, it will be appreciated that embodiments of the present disclosure may employ any combination of features described herein.

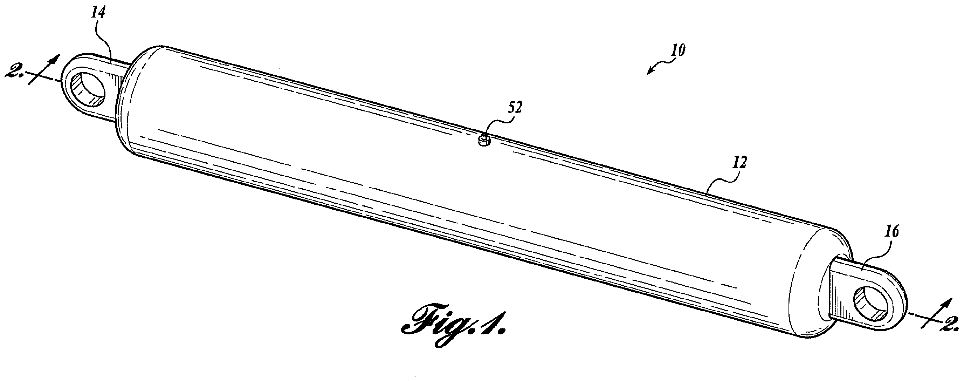

FIGURE 1 shows a first representative embodiment of a damper 10 according to an aspect of the present disclosure. The damper 10 includes a cylindrical housing 12 formed from a metal, such as aluminum or titanium alloys. Alternate embodiments are contemplated in which other materials or combinations of materials having suitable strength and durability are utilized. The materials are preferably chosen to minimize the weight and thickness of the housing 12, however, it will be appreciated that any number of different materials can be utilized and the inclusion of such alternate materials should be considered within the scope of the present disclosure.

A first lug 14 extends longitudinally from one end of the housing 12, and a second lug 16 extends longitudinally from an opposite end of the housing. The lugs 14 and 16 are sized and configured to allow the housing 12 to be mountable to a cooperating component of the aircraft landing gear. In this regard, a component of the landing gear includes corresponding clevises to allow the housing 12 to be coupled at each end to the landing gear component with pins, bolts, or other suitable fasteners so that the housing is fixedly secured to the landing gear component. It will be appreciated that the illustrated lugs are exemplary only, and the size, position, and orientation of the lugs may vary within the scope of the present disclosure. It is further contemplated that the attachment of the housing is not limited to lugs, but can include any other known configurations suitable to secure the housing 12 to the landing gear component. It will also be appreciated that that the exterior shape of the housing is exemplary only. In this regard, the illustrated cylindrical shape of the housing should not be considered limiting.

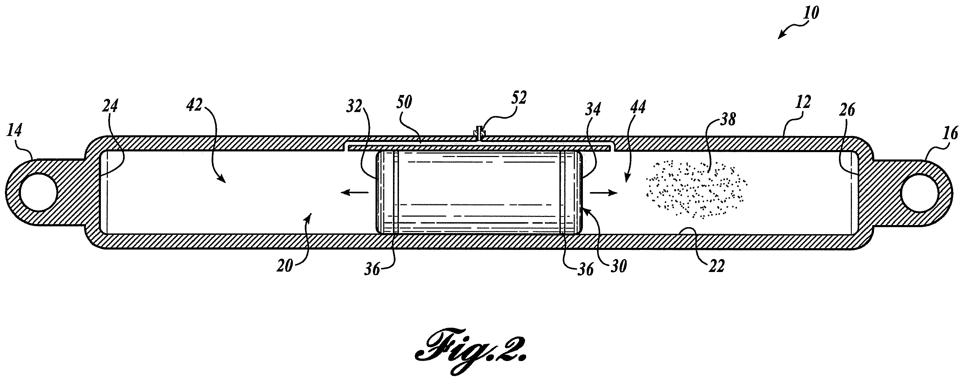

Referring now to FIGURE 2, a cavity 20 is formed within the housing 12. The cavity 20 is generally defined by a cylindrical inner surface 22 that extends axially along at least a portion of the housing 12 in conjunction with first and second end surfaces 24 and 26 positioned at opposite ends of the cylindrical surface.

A weight 30 is slidingly disposed within the cavity 20. In the illustrated embodiment, the weight 30 is sized and configured to sealingly engage the cylindrical surface 22 of the cavity 20 as it slides within the cavity 20. More specifically, the outer surface of the weight 30 has a generally cylindrical shape having a slightly smaller diameter than the diameter of the cylindrical surface 22 of the cavity 20. One or more seals 36 are disposed between the weight and the surface 22 to provide an airtight or substantially airtight seal between the weight and the cylindrical surface. In the illustrated embodiment, the seals 36 are elastic O-rings partially disposed within annular grooves formed in opposite ends of the weight 30. The O-rings are sized to provide a seal between the weight 30 and the cylindrical surface 22, while allowing reciprocating movement of the weight 30 along the length of the cavity 20. A lubricant 38, such as a light oil, facilitates movement of the weight 30, ensures an airtight seal, and reduces wear on the seals. Alternate embodiments are contemplated in which piston rings or other suitable sealing configurations are utilized. When disposed in the cavity 20, the weight 30 creates first and second volumes 42 and 44 on opposite sides 32 and 34, respectively, of the weight 30.

A transfer conduit 50 is provided with the housing 10. In the embodiment shown, the transfer conduit 50 is integrally formed in the body 12 such that one end of the conduit is in fluid communication with the first volume 42, and a second end of the conduit is in fluid communication with the second volume 44. A valve 52 is mounted to the housing in fluid communication with the transfer conduit 50. The valve 52 allows for selective introduction and release of a fluid into and out of the first and second volumes 42 and 44 of the damper 10. The fluid is preferably an inert gas, but can alternatively be a combination of inert and/or non-inert gases, such as air.

In use, the damper 10 is mounted to a landing gear component to reduce vibration that would otherwise be experienced by the landing gear. In one representative embodiment, the damper 10 is mounted to the torque link of either the main landing gear or the nose landing gear. Although not required, the damper 10 is preferably mounted at a location on the landing gear most likely to have the largest vibration amplitude. Mounting the damper 10 at such a location, for example at the torque link apex joint, optimizes the effectiveness of the damper. It will be appreciated, however, that the damper 10 can be mounted to any part of the landing gear by any suitable attachment configuration.

In use, the landing gear experiences vibration during takeoff, landing, and taxiing. With the damper 10 mounted to a component of the landing gear, the landing gear vibration causes the damper to vibrate as well. As the damper 10 vibrates, the housing 12 moves with the landing gear component, and the inertia of the weight 30 causes the weight to move relative to the housing 10 in a direction opposite to the vibration, i.e., out of phase with the vibration.

As the weight 30 moves relative to the housing 10, the gas inside each of the first and second volumes 42 and 44 act as pneumatic spring that biases the weight 30 toward the middle of the housing 12. In this regard, movement of the weight 30 toward the first end surface 24 reduces the size of the first volume 42, thereby compressing the gas in the first volume. The compressed gas in turn applies a biasing force to the weight 30 that tends to move the weight toward the second end surface 26. Similarly, movement of the weight 30 toward the second end surface 26 compresses the gas in the second volume 44, which applies a biasing force that tends to move the weight toward the first end surface 24.

The damper has a natural frequency that is determined mainly by the mass of the weight 30 and the spring rate of the compressed gas within the first and second volumes 42 and 44. In order to optimize the performance of the damper 10 to a particular landing gear, it is desirable to be able to adjust the natural frequency of the damper 10. To a produce a damper 10 having a suitable natural frequency, the weight 30 can be selected to have a mass that provides a desired natural frequency. While varying the mass of the weight 30 is an effective way to adjust the natural frequency of the damper 10, it is not ideal due to manufacturing considerations.

The presently disclosed damper 10 allows for adjustment of the damper's natural frequency by selectively modifying the pressure of the gas within the first and second volumes 42 and 44. Referring to FIGURE 2, the valve 52 is a standard pneumatic valve that allows for the amount of gas within the damper 10 to be selectively increased or decreased. It will be appreciated that the present disclosure is not limited to a particular valve, but can include any configuration that allows gas to be added and/or removed from the body of the damper. Further, embodiments are contemplated in which the amount of gas within the damper 10 is not adjustable, but is determined when the damper is assembled. Adding gas to the damper 10 through the valve 52 increases the pressure in the first and second volumes 42 and 44, and releasing gas from the damper through the valve 52 decreases the pressure in the first and second volumes. The passageway 50 that extends between the first and second volumes 42 and 44 allows the pressure between the first and second volumes to equalize when the weight 30 is stationary relative to the body 12.

It is generally known that the spring rate (stiffness) K of a pneumatic spring varies with the pressure of the gas within the spring. In this regard, pneumatic springs typically have a progressive spring rate wherein the spring rate increases when the pressure of the gas within the spring increases. As a result, the spring rate of the pneumatic springs (the gas within the first and second volumes 42 and 44) and, therefore, the natural frequency of the damper 10 can be adjusted by increasing or decreasing the amount of gas within the damper, i.e., by adjusting the pressure of the gas within the damper. Accordingly, the presently disclosed damper 100 allows for tuning the damper 10 to optimally damp the shimmy vibration of a particular landing gear configuration.

While illustrative embodiments have been illustrated and described, it will be appreciated that various changes can be made therein without departing from the spirit and scope of the claimed subject matter.

## Claims

1. A damper (10) for an aircraft landing gear, comprising:
a housing (12) comprising an internal cavity;
a weight (30) slidingly disposed within the cavity (20), the weight (30) sealingly engaging a wall (22) of the cavity (20) to divide the cavity into a first chamber (42) and a second chamber (44);
a passageway (50) extending from the first chamber (42) to the second chamber (44) and providing an unregulated fluid connection between the first and second chambers (42, 44); and
a fluid disposed within the first and second chambers (42, 44), wherein the fluid provides a resistive force in response to movement of the weight (30) within the cavity (22),
**characterized in that** the passageway (50) is integrally formed in the housing (12).

2. The damper (10) of Claim 1, wherein the fluid is a compressed gas.

3. The damper (10) of Claim 2, further comprising a valve (52) in fluid communication with the passageway (50), the valve (52) providing for selective introduction of gas into the cavity (20).

4. The damper (10) of Claim 3, wherein the housing (12) is adapted to be fixedly coupled to a landing gear component.

5. The damper (10) of Claim 2, wherein movement of the weight (30) in a first direction compresses the gas in the first chamber (42) to provide a resistive force that biases the weight (30) in a second direction opposite the first direction.

6. The damper (10) of Claim 2, wherein movement of the weight (30) in the second direction compresses the gas in the second chamber (44) to produce a resistive force that biases the weight (30) in the first direction.

7. The damper (10) of claim 2, wherein the first chamber (42) with a first volume of the fluid forms a first pneumatic spring and the second chamber (44) with a second volume of the fluid forms a second pneumatic spring, the first pneumatic spring being configured to apply a first force to the weight (30) and the second pneumatic spring being configured to apply a second force to the weight (30), the damper (10) further comprising at least one mounting feature to fixedly mount the housing to a component of the aircraft landing gear.

8. The damper (10) of Claim 7, wherein movement of the weight (30) changes a size of the first chamber (42) and a size of the second chamber (44).

9. The damper (10) of Claim 8, wherein an increase in the size of the first chamber (42) corresponds to a decrease in the size of the second chamber (44).

10. The damper (10) of Claim 7, wherein the first pneumatic springs applies the first force in a first direction, and the second pneumatic spring applies the second force in a second direction opposite the first direction.

## Patentansprüche

1. Dämpfer (10) für ein Flugzeugfahrwerk, umfassend:
ein Gehäuse (12), umfassend einen inneren Hohlraum,
ein Gewicht (30), das gleitbar innerhalb des Hohlraums (20) angeordnet ist, wobei das Gewicht (30) gleitbar in eine Wand (22) des Hohlraums (20) eingreift, um den Hohlraum in eine erste Kammer (42) und eine zweite Kammer (44) zu unterteilen,
einen Durchgang (50), der sich von der ersten Kammer (42) bis zur zweiten Kammer (44) erstreckt und eine nicht regulierte fluidische Verbindung zwischen der ersten und zweiten Kammer (42, 44) bereitstellt; und
ein Fluid, das innerhalb der ersten und zweiten Kammer (42, 44) bereitgestellt ist, wobei das Fluid eine Widerstandskraft in Reaktion auf die Bewegung des Gewichts (30) innerhalb des Hohlraums (22) bereitstellt,
**dadurch gekennzeichnet, dass** der Durchgang (50) einstückig im Gehäuse (12) ausgebildet ist.

2. Dämpfer (10) nach Anspruch 1, wobei das Fluid ein komprimiertes Gas ist.

3. Dämpfer (10) nach Anspruch 2, weiter umfassend ein Ventil (52) in fluidischer Verbindung mit dem Durchgang (50), wobei das Ventil (52) eine selektive Einführung von Gas in den Hohlraum (20) bereitstellt.

4. Dämpfer (10) nach Anspruch 3, wobei das Gehäuse (12) ausgelegt ist, um fest mit einer Fahrwerkkomponente gekoppelt zu sein.

5. Dämpfer (10) nach Anspruch 2, wobei die Bewegung des Gewichts (30) in einer ersten Richtung das Gas in der ersten Kammer (42) komprimiert, um eine Widerstandskraft bereitzustellen, die das Gewicht (30) in einer zweiten Richtung vorspannt, die der ersten Richtung entgegengesetzt ist.

6. Dämpfer (10) nach Anspruch 2, wobei die Bewegung des Gewichts (30) in der zweiten Richtung das Gas in der zweiten Kammer (44) komprimiert, um eine Widerstandskraft zu erzeugen, die das Gewicht (30) in der ersten Richtung vorspannt.

7. Dämpfer (10) nach Anspruch 2, wobei die erste Kammer (42) mit einem ersten Volumen des Fluids eine erste pneumatische Feder bildet und die zweite Kammer (44) mit einem zweiten Volumen des Fluids eine zweite pneumatische Feder bildet, wobei die erste pneumatische Feder konfiguriert ist, um eine erste Kraft auf das Gewicht (30) auszuüben, und die zweite pneumatische Feder konfiguriert ist, um eine zweite Kraft auf das Gewicht (30) auszuüben, wobei der Dämpfer (10) weiter mindestens ein Montagemerkmal umfasst, um das Gehäuse fest an einer Komponente des Flugzeugfahrwerks zu montieren.

8. Dämpfer (10) nach Anspruch 7, wobei die Bewegung des Gewichts (30) eine Größe der ersten Kammer (42) und eine Größe der zweiten Kammer (44) ändert.

9. Dämpfer (10) nach Anspruch 8, wobei eine Erhöhung der Größe der ersten Kammer (42) einer Verkleinerung der Größe der zweiten Kammer (44) entspricht.

10. Dämpfer (10) nach Anspruch 7, wobei die erste pneumatische Feder die erste Kraft in einer Richtung ausübt und die zweite pneumatische Feder die zweite Kraft in einer zweiten Richtung ausübt, die der ersten Richtung entgegengesetzt ist.

## Revendications

1. Amortisseur (10) pour un train d'atterrissage d'aéronef comprenant :
un logement (12) comprenant une cavité interne ;
un poids (30) disposé par coulissement dans la cavité (20), le poids (30) mettant en prise de manière étanche une paroi (22) de la cavité (20) pour diviser la cavité en une première chambre (42) et une seconde chambre (44) ;
un passage (50) s'étendant de la première chambre (42) à la seconde chambre (44) et fournissant une connexion de fluide non régulée entre les première et seconde chambres (42, 44) ; et
un fluide disposé dans les première et seconde chambres (42, 44), dans lequel le fluide fournit une force de résistance en réponse au mouvement du poids (30) dans la cavité (22),
**caractérisé en ce que** le passage (50) est formé d'un seul tenant dans le logement (12).

2. Amortisseur (10) selon la revendication 1, dans lequel le fluide est un gaz compressé.

3. Amortisseur (10) selon la revendication 2, comprenant en outre une valve (52) en communication de fluide avec le passage (50), la valve (52) fournissant une introduction sélective de gaz dans la cavité (20).

4. Amortisseur (10) selon la revendication 3, dans lequel le logement (12) est adapté pour être couplé par fixation à un composant de train d'atterrissage.

5. Amortisseur (10) selon la revendication 2, dans lequel le mouvement du poids (30) dans une première direction compresse le gaz dans la première chambre (42) pour fournir une force de résistance qui sollicite le poids (30) dans une seconde direction opposée à la première direction.

6. Amortisseur (10) selon la revendication 2, dans lequel le mouvement du poids (30) dans la seconde direction compresse le gaz dans la seconde chambre (44) pour produire une force de résistance qui sollicite le poids (30) dans la première direction.

7. Amortisseur (10) selon la revendication 2, dans lequel la première chambre (42) avec un premier volume du fluide forme un premier ressort pneumatique et la seconde chambre (44) avec un second volume du fluide forme un second ressort pneumatique, le premier ressort pneumatique étant configuré pour appliquer une première force au poids (30) et le second ressort pneumatique étant configuré pour appliquer une seconde force au poids (30), l'amortisseur (10) comprenant en outre au moins un élément de montage pour monter fixement le logement sur un composant du train d'atterrissage d'aéronef.

8. Amortisseur (10) selon la revendication 7, dans lequel le mouvement du poids (30) change une taille de la première chambre (42) et une taille de la seconde chambre (44).

9. Amortisseur (10) selon la revendication 8, dans lequel une augmentation de la taille de la première chambre (42) correspond à une diminution de la taille de la seconde chambre (44).

10. Amortisseur (10) selon la revendication 7, dans lequel le premier ressort pneumatique applique la première force dans une première direction, et le second ressort pneumatique applique la seconde force dans une seconde direction opposée à la première direction.
